# EUROPÄISCHE PATENTANMELDUNG

(11) **EP 3 330 150 A1**
(43) Veröffentlichungstag der Anmeldung: **06.06.2018**
(21) Anmeldenummer: 17197230.0
(22) Anmeldetag: 19.10.2017
(51) Int. Cl.: B60W 50/10, B60W 50/00

(54) **VERFAHREN UND VORRICHTUNG ZUR ERZEUGUNG EINER STEUERUNG EINER IN ABHÄNGIGKEIT EINES GASPEDALWINKELS EINES FAHRZEUGS ERZEUGTEN MOTORLEISTUNG**

(30) Priorität: 01.12.2016 DE 102016223970
(71) Anmelder: Robert Bosch GmbH, 70442 Stuttgart (DE)
(72) Erfinder: Brochhaus, Markus, 70195 Stuttgart (DE); Engelhardt, Markus, 50999 Köln (DE)

(57) **Zusammenfassung**

Das Verfahren sowie der Server (10) empfangen wenigstens eine Standortinformation des Fahrzeugs. In Abhängigkeit solch einer empfangenen Standortinformation ermittelt der Server (10) anschließend schnell und ohne zusätzlichen Rechenaufwand den Standort des Fahrzeugs auf einer digitalen Karte. In Abhängigkeit des somit lokalisierten Fahrzeugs wird eine Gaspedalkennlinie für das Gaspedal des Fahrzeugs mittels des Servers (10) ermittelt. Die Gaspedalkennlinie wird von dem Server (10) an eine Steuereinheit (80) des Fahrzeugs übertragen. In Abhängigkeit der übertragenen Gaspedalkennlinie wird eine Steuerung der erzeugten Motorleistung erzeugt. Die erzeugte Motorleistung ist wiederum abhängig von dem Winkel des getätigten Gaspedals des Fahrzeugs.

## Beschreibung

### Stand der Technik

Die Erfindung betrifft ein Verfahren, einen Server und ein den Server aufweisendes System zur Erzeugung einer Steuerung einer in Abhängigkeit eines Gaspedalwinkels eines Fahrzeugs erzeugten Motorleistung.

Das Dokument DE 20 2014 006 922 U1 beschreibt ein Verfahren mit Gaskennliniensteuerung im Zusammenhang mit einem Umfeldsensor. Die Gaskennlinie wird hierbei in Abhängigkeit vom Abstand zu einem Umgebungsobjekt eingestellt. Weiterhin ist hierbei die Kopplung der Gaskennliniensteuerung mit einer Bremse vorgesehen, um eine aktive Verringerung der Geschwindigkeit zu erreichen. Warnvorrichtungen sind vorgesehen, um den Fahrer in Abhängigkeit von dem Abstand des Kraftfahrzeugs zu dem Objekt zu warnen.

In der DE 102 095 039 A1 ist ebenfalls beschrieben bei Parkvorgängen eine entsprechend geeignete Pedalkennlinie zu wählen.

Daraus kann sich das Problem ergeben, dass sehr viele Rechenoperationen innerhalb des Fahrzeugs durchgeführt werden und die dafür zuständige Recheneinheit entsprechend rechenintensiv ausgelegt sein muss.

### Offenbarung der Erfindung

Um diesem Problem zu begegnen, werden erfindungsgemäß ein Verfahren, ein Server, der das Verfahren ausführt und ein den Server aufweisendes System zur Erzeugung einer Steuerung einer in Abhängigkeit eines Gaspedalwinkels eines Fahrzeugs erzeugten Motorleistung vorgeschlagen.

Bei dem erfindungsgemäßen Verfahren wird wenigstens eine Standortinformation des Fahrzeugs mittels eines Servers empfangen. Bei einer Standortinformation handelt es sich um eine Information, die Rückschlüsse über die aktuelle Position des Fahrzeugs gibt. Standortinformationen können beispielsweise Navigationsdaten, wie GPS-Daten repräsentieren. In Abhängigkeit solch einer empfangenen Standortinformation wird ohne zusätzlichen Rechenaufwand der Standort des Fahrzeugs auf einer digitalen Karte ermittelt. Digitale Karten können zentral auf einem Server in einer sogenannten Cloud hinterlegt sein, auf den mehrere Fahrzeuge Zugriff haben. Die Fahrzeuge empfangen hierbei nicht nur Informationen der digitalen Karte mittels des Servers, sondern senden ebenfalls Verkehrsinformationen welche wiederum in die digitale Karte mit einfließen an den Server. Die digitalen Karten können somit ständig aktualisiert werden und sind somit oft wesentlich aktueller als beispielsweise Karten aus handelsüblichen Navigationsgeräten. Bei einer Standortinformation kann es sich auch beispielsweise um Abstandswerte zu bestimmten statischen Objekten handeln, wobei die Standorte der statischen Objekte auf einer digitalen Karte als sogenannte Landmarken hinterlegt sind. Diese Art der Lokalisierung bietet den Vorteil, dass sie auch z.B. in Parkhäusern oder Tunneln funktioniert, in denen oft kein GPS-Empfang möglich ist. Außerdem bietet diese Lokalisierungsmethode eine hohe Genauigkeit.

In Abhängigkeit der aktuellen Position des somit lokalisierten Fahrzeugs wird eine Gaspedalkennlinie für das Gaspedal des Fahrzeugs mittels des Servers ermittelt. Hierzu kann der Server beispielsweise auf Look-up-Tabellen zurückgreifen oder auch anhand verschiedener Parameter die für den aktuellen Standort des Fahrzeugs passende Gaspedalkennlinie berechnen. Unterschiedliche Standorte des Fahrzeugs können unterschiedliche Gaspedalkennlinien erfordern. So ist z.B. in einem engen Parkhaus eine flachere Pedalkennlinie nötig, als auf einer Autobahn mit wenig Verkehr. Eine flachere Pedalkennlinie bewirkt, dass auch bei einer großen Pedalbewegung nur ein langsamer Vortrieb bewirkt wird. Somit kann in dem engen Parkhaus präziser manövriert werden.

Die Gaspedalkennlinie wird von dem Server an eine Steuereinheit des Fahrzeugs übertragen. Bei der Steuereinheit handelt es sich vorzugsweise um die Motorsteuereinheit des Fahrzeugs, da diese für die Steuerung der Motorleistung zuständig ist.

In Abhängigkeit der übertragenen Gaspedalkennlinie wird eine Steuerung der erzeugten Motorleistung erzeugt. Die erzeugte Motorleistung ist wiederum abhängig von dem Winkel des getätigten Gaspedals des Fahrzeugs. Die Gaspedalkennlinie bestimmt den Zusammenhang zwischen Gaspedalwinkel und Motorleistung.

Vorzugsweise wird zusätzlich wenigstens eine Betriebsgröße des Fahrzeugs mittels des Servers empfangen. Unter einer Betriebsgröße ist hierbei eine Größe zu verstehen, welche den aktuellen Betrieb des Fahrzeugs charakterisiert. Beispielsweise kann eine Betriebsgröße eine die Bewegung des Fahrzeugs beschreibende Größe, wie die Geschwindigkeit des Fahrzeugs und/oder den eingeschlagenen Lenkwinkel des Fahrzeugs darstellen. Die Betriebsgröße kann aber auch beispielsweise die durch den Motor erzeugte Vortriebskraft darstellen. In Abhängigkeit der erfassten wenigstens einen Betriebsgröße des Fahrzeugs wird eine Bewegungs-Trajektorie, also der voraussichtliche zukünftige Bewegungspfad des Fahrzeugs ermittelt. Der Server berücksichtigt die Bewegungs-Trajektorie des Fahrzeugs bei der Ermittlung der Gaspedalkennlinie, indem die Bewegung des Fahrzeugs relativ zu der digitalen Karte betrachtet wird. Somit kann beispielsweise erkannt werden, inwiefern sich ein Fahrzeug auf ein Gefahrengebiet zu- oder wegbewegt. Das Verfahren wird somit sicherer, wie auch eine höhere Präzision ist möglich.

Bevorzugt werden Abstandswerte des Fahrzeugs zu, das Fahrzeug angrenzenden Objekten empfangen. Angrenzende Objekte bezeichnen hierbei die zum Fahrzeug nächstliegenden Objekte. Die Ermittlung der Gaspedalkennlinie wird zusätzlich in Abhängigkeit der empfangenen Abstandswerte mittels des Servers durchgeführt, indem beispielsweise berücksichtigt wird, dass kleine Abstände zu Objekten eine flachere Gaskennlinie erfordern, als vergleichbar große Abstände. Diese ergänzend abstandsabhängige Ermittlung bietet den Vorteil, dass Fahrmanöver noch präziser und sicherer ausgeführt werden können.

Vorzugsweise werden eine aktuelle Wetterlage des Standorts des Fahrzeugs charakterisierende Informationen mittels des Servers empfangen. Die Gaspedalkennlinie wird zusätzlich in Abhängigkeit der empfangenen, die aktuelle Wetterlage charakterisierenden Informationen mittels des Servers ermittelt, indem beispielsweise wetterspezifische Gefahren bei der Ermittlung berücksichtigt werden. Eine, die aktuelle Wetterlage des Fahrzeugstandorts charakterisierende Information repräsentiert beispielsweise die Außentemperatur am Fahrzeugstandort. Somit kann beispielsweise festgestellt werden, ob die Gefahr von Glatteis erhöht ist, wodurch eventuell eine flachere Gaspedalkennlinie benötigt wird. Eine weitere, die aktuelle Wetterlage des Fahrzeugstandorts charakterisierende Information ist die Luftfeuchtigkeit am Fahrzeugstandort außerhalb des Fahrzeugs. Dies kann z.B. Rückschlüsse über vorliegenden Nebel liefern. Eine andere, die aktuelle Wetterlage des Fahrzeugstandorts charakterisierende Information ist der Niederschlag am Fahrzeugstandort. Somit können Rückschlüsse über Fahrbahnfeuchtigkeit gezogen werden.

Auch die Beschaffenheit des Bodens, den das Fahrzeug momentan befährt, ist ein Faktor, der bei der Ermittlung der Gaspedalkennlinie berücksichtigt werden kann. So ergibt sich auf Asphalt beispielsweise eine andere Haftung der Räder als auf Rasen, wodurch eine unterschiedliche Gaspedalkennlinie erforderlich wird. Die Bodenbeschaffenheit wird vorzugsweise in Abhängigkeit der empfangenen Abstandswerte ermittelt. Plötzliche Ausschläge bei den empfangenen Abstandswerten können z.B. auf Schlaglöcher oder welligen Untergrund hindeuten. Alternativ oder zusätzlich wird die Bodenbeschaffenheit in Abhängigkeit der empfangenen, die aktuelle Wetterlage charakterisierenden Informationen ermittelt. So kann beispielsweise hoher Niederschlag mit Temperaturen im Gefrierbereich auf eisigen Untergrund hindeuten.

Bevorzugt wird in Abhängigkeit der ermittelten Bewegungs-Trajektorie des Fahrzeugs mittels des Servers ein Parkvorgang in einen Parkplatz hinein oder aus einem Parkplatz hinaus ermittelt. Der Server ermittelt in Abhängigkeit der digitalen Karte Informationen des Parkplatzes. Hierbei ist beispielsweise die Dimensionierung des Parkplatzes zu berücksichtigen, da somit enge Parkplätze mit entsprechenden Gefahren einer Kollision erkannt werden können. Die Gaspedalkennlinie wird zusätzlich in Abhängigkeit der ermittelten Parkplatzinformationen ermittelt. Besonders bei Parkvorgängen bietet das Verfahren Vorteile, da Parkplatzinformationen über das Internet aus einer Datencloud an das Fahrzeug übertragen werden können. Enge Parkplätze, wie z.B. in alten Cityparkhäusern, welche eine präzise Steuerung der Motorleistung über das Gaspedal erfordern, können somit trotzdem mit erhöhter Sicherheit zum Parken verwendet werden.

Vorzugsweise wird wenigstens ein Signal zur Anpassung der Gaspedalkennlinie mittels des Servers empfangen. Dieses Signal entspricht dem Wunsch zur Anpassung der Gaspedalkennlinie. Das Übertragen der Gaspedalkennlinie von dem Server zu der Steuereinheit erfolgt zusätzlich in Abhängigkeit eines empfangenen Anpassungssignals. Dies bietet den Vorteil, dass der Fahrer selbstständig entscheiden kann, wann er eine Anpassung der erzeugten Motorleistung in Abhängigkeit des Gaspedalwinkels erzeugt haben möchte.

Die Erfindung umfasst zudem ein System, welches wenigstens aus einem Server, einer Standorterfassungseinheit, einer Speichereinheit und einer Steuereinheit besteht. Die Standorterfassungseinheit, welche beispielsweise ein Navigationssystem und/oder einen Abstandssensor repräsentiert, ist zum Erfassen wenigstens einer Standortinformation des Fahrzeugs ausgebildet. Mittels dieser Standorterfassungseinheiten ist das Ermitteln eines Standorts des Fahrzeugs auf einer digitalen Karte möglich. Die Speichereinheit ist zum Hinterlegen einer solchen digitalen Karte ausgebildet. Die Steuereinheit des Systems, welches beispielsweise die Motorsteuereinheit repräsentiert, ist dazu ausgebildet, eine Steuerung der erzeugten Motorleistung in Abhängigkeit des Gaspedalwinkels des Fahrzeugs zu erzeugen. Eine vorzugsweise vorgesehene Ausgabeeinheit dient zur Ausgabe eines Warnsignals in Abhängigkeit einer übertragenen Gaspedalkennlinie von dem Server an eine Steuereinheit des Fahrzeugs. So kann sich der Fahrer des Fahrzeugs besser auf eine bevorstehende Veränderung der Steuerung der erzeugten Motorleistung in Abhängigkeit des Gaspedalwinkels des Fahrzeugs einstellen. Der Server führt das zuvor beschriebene Verfahren zur Erzeugung einer Steuerung einer in Abhängigkeit eines Gaspedalwinkels eines Fahrzeugs erzeugten Motorleistung aus.

### Beschreibung der Zeichnungen

Figur 1 zeigt eine Ausführungsform des erfindungsgemäßen Servers.
Figur 2 zeigt einen Verfahrensablauf gemäß der Erfindung zur Erzeugung einer Steuerung einer in Abhängigkeit eines Gaspedalwinkels eines Fahrzeugs erzeugten Motorleistung.

### Ausführungsbeispiele

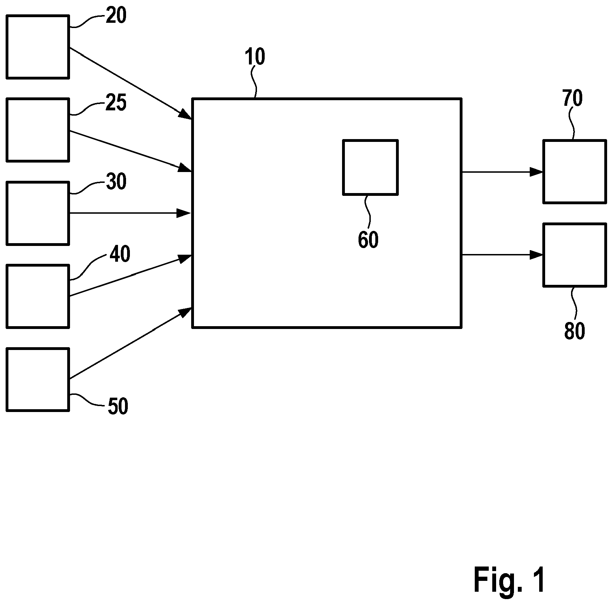

Figur 1 zeigt eine Ausführungsform des erfindungsgemäßen Servers 10 zum Ermitteln und zum Übertragen einer Gaspedalkennlinie eines Fahrzeugs eingerichtet ist.

Der Server 10 empfängt hierbei wenigstens eine Standortinformation des Fahrzeugs von einer Standorterfassungseinheit 20. Der Server 10 ist dazu eingerichtet, einen Standort des Fahrzeugs auf einer digitalen Karte in Abhängigkeit der empfangenen Standortinformation zu ermitteln. In diesem Zusammenhang ist der Server dazu ausgebildet, auf eine Speichereinheit 60 zuzugreifen, auf welcher solch eine digitale Karte hinterlegt ist. Diese Speichereinheit 60 ist in diesem Ausführungsbeispiel intern in dem Server 10 integriert, kann sich jedoch auch extern von dem Server 10 befinden. In Abhängigkeit des ermittelten Standorts des Fahrzeugs ermittelt der Server 10 eine Gaspedalkennlinie für das Gaspedal des Fahrzeugs. Der Server 10 ist weiterhin dazu ausgebildet, einer Steuereinheit 80 die Gaspedalkennlinie für das Gaspedal des Fahrzeugs in Abhängigkeit eines ermittelten Fahrzeugstandorts zu übertragen.

Optional empfängt der Server 10 wenigstens eine Betriebsgröße des Fahrzeugs von einem Sensor 50, der zum Erfassen wenigstens einer Fahrzeugbetriebsgröße ausgebildet ist. Solch ein Sensor 50 zum Erfassen wenigstens einer Betriebsgröße kann beispielsweise einen Abstandssensor, einen Lenkwinkelsensor und/oder einen Geschwindigkeitssensor repräsentieren. Der Server 10 ermittelt eine Bewegungs-Trajektorie des Fahrzeugs in Abhängigkeit der empfangenen Betriebsgröße und ist weiterhin dazu ausgebildet, zusätzlich in Abhängigkeit der ermittelten Bewegungs-Trajektorie die Gaspedalkennlinie des Fahrzeugs zu ermitteln. Weiterhin überträgt der Server 10 die ermittelte Gaspedalkennlinie an die Steuereinheit 80 des Fahrzeugs.

Optional empfängt der Server 10 Abstandswerte des Fahrzeugs zu, an das Fahrzeug angrenzenden Objekten von einem Abstandssensor 30. Der Abstandssensor 30 ist zum Erfassen von Abstandswerten ausgebildet und kann beispielsweise einen Ultraschall- oder Radarsensor repräsentieren. Der Server 10 ermittelt zusätzlich in Abhängigkeit der Abstandswerte des Fahrzeugs zu, das Fahrzeug angrenzenden Objekten die Gaspedalkennlinie des Fahrzeugs und überträgt diese an die Steuereinheit 80 des Fahrzeugs.

Optional empfängt der Server 10 eine aktuelle Wetterlage charakterisierende Informationen von einem zweiten Server 25. Solch ein zweiter Server 25, der zur Erfassung der aktuellen Wetterlage ausgebildet ist, repräsentiert beispielsweise einen Hochleistungsrechner, der Daten von Sensoren erfasst, die z.B. die Messwerte der Sonne, des Niederschlags oder des Luftdrucks erfassen und daraus wiederum eine Wettervorhersage für einen bestimmten Standort prognostiziert. Optional können die Informationen auch von einem Internetdienst empfangen werden, der aktuelle Wetterdaten zur Verfügung stellt. Der Server 10 ermittelt zusätzlich in Abhängigkeit der, die aktuelle Wetterlage des Fahrzeugstandorts charakterisierenden Informationen die Gaspedalkennlinie des Fahrzeugs und überträgt diese an die Steuereinheit 80 des Fahrzeugs.

Optional empfängt der Server 10 wenigstens ein Signal zur Anpassung der Gaspedalkennlinie von einer Eingabeeinheit 40. Diese Eingabeeinheit 40 ist dazu ausgebildet, eine Eingabe solch eines Anpassungssignals zu ermöglichen und kann beispielsweise ein Touchscreen, Joystick und/oder Taste im Fahrzeug repräsentieren. Der Server 10 ermittelt zusätzlich in Abhängigkeit der des wenigstens einen Anpassungssignals die Gaspedalkennlinie des Fahrzeugs und überträgt diese an die Steuereinheit 80 des Fahrzeugs.

Optional überträgt der Server 10 eine Information zur Erzeugung einer Steuerung einer in Abhängigkeit eines Gaspedalwinkels eines Fahrzeugs erzeugten Motorleistung an eine Ausgabeeinheit 70. Diese Ausgabeeinheit 70 ist dazu ausgebildet, beispielsweise ein Warnsignal bei bevorstehender Änderung der Gaspedalkennlinie an den Fahrer des Fahrzeugs visuell und/oder akustisch auszugeben. Die Ausgabeeinheit 70 repräsentiert hierzu beispielsweise einen Display oder einen Lautsprecher.

Optional ist der Server 10 weiterhin dazu ausgebildet, die Bodenbeschaffenheit in Abhängigkeit der empfangenen Abstandswerte und/oder der empfangenen, die aktuelle Wetterlage charakterisierenden Informationen zu ermitteln. Der Server 10 ermittelt zusätzlich in Abhängigkeit der Bodenbeschaffenheit die Gaspedalkennlinie und überträgt diese an die Steuereinheit 80 des Fahrzeugs.

Die Datenverbindung des Servers mit den anderen Einheiten erfolgt vorzugsweise drahtlos, z.B. über Internet.

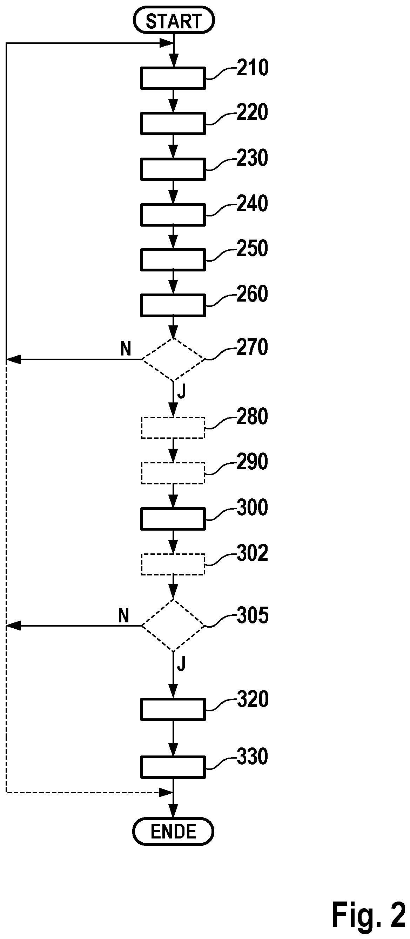

Figur 2 zeigt einen erfindungsgemäßen Verfahrensablauf zur Erzeugung einer Steuerung einer in Abhängigkeit eines Gaspedalwinkels eines Fahrzeugs erzeugten Motorleistung.

Dabei wird in einer ersten Ausführungsform des Verfahrens in einem Verfahrenssschritt 210 zunächst wenigstens eine Standortinformation des Fahrzeugs mittels eines Servers empfangen. In einem nächsten Verfahrensschritt 250 wird mittels des Servers ein Standort des Fahrzeugs auf einer digitalen Karte in Abhängigkeit der empfangenen Standortinformation ermittelt.

In einem nächsten Verfahrensschritt 300 wird hinsichtlich des Fahrzeugstandorts mittels des Servers eine Gaspedalkennlinie ermittelt. Befindet sich das Fahrzeug z.B. in einem engen Parkhaus, so wird eine vergleichsweise flachere Pedalkennlinie benötigt, als beispielsweise auf einer Autobahn mit wenig Verkehr.

Die ermittelte Gaspedalkennlinie wird in einem nächsten Verfahrensschritt 320 an eine Steuereinheit des Fahrzeugs übertragen. In einem darauf folgenden Verfahrensschrit 330 wird in Abhängigkeit der übertragenen Gaspedalkennlinie mittels der Steuereinheit eine Steuerung der in Abhängigkeit des Gaspedalwinkels des Fahrzeugs erzeugten Motorleistung erzeugt. Eine im Vergleich flacher verlaufende Pedalkennlinie erzeugt hierbei bei gleichem getätigten Gaspedalwinkel weniger Motorleistung und somit weniger Vortrieb.

In einer zweiten Ausführungsform des Verfahrens wird zusätzlich zu den, in der ersten Ausführungsform genannten Verfahrensschritten, in einem auf den Verfahrensschritt 210 folgenden Verfahrensschritt 220 wenigstens eine Betriebsgröße des Fahrzeugs mittels des Servers empfangen. In einem auf den Verfahrensschritt 250 folgenden Verfahrensschritt 260 wird mittels des Servers eine Bewegungs-Trajektorie des Fahrzeugs in Abhängigkeit der empfangenen Betriebsgröße ermittelt. So kann z.B. ermittelt werden, wie sich das Fahrzeug relativ zu den Objekten auf der digitalen Karte voraussichtlich bewegt. Die ermittelte Bewegungs-Trajektorie wird im Verfahrensschritt 300 noch zusätzlich bei der Ermittlung der Gaspedalkennlinie berücksichtigt, indem beispielsweise erfasst wird, ob sich das Fahrzeug von einem Objekt weg- oder auf ein Objekt zubewegt.

In einer dritten Ausführungsform des Verfahrens werden zusätzlich zu den, in den zuvorigen Ausführungsformen genannten Verfahrensschritten, in einem auf den Verfahrensschritt 220 folgenden Verfahrensschritt 230 Abstandswerte des Fahrzeugs zu, das Fahrzeug angrenzenden Objekten mittels des Servers empfangen. So lässt sich z.B. feststellen, welchen Abstand ein Fahrzeug bei einem Parkvorgang von einem Hindernis noch besitzt. Die empfangenen Abstandswerte werden im Verfahrensschritt 300 noch zusätzlich bei der Ermittlung der Gaspedalkennlinie berücksichtigt. Das Fahrzeug lässt sich somit präzise nah an ein Hindernis heranfahren.

In einer vierten Ausführungsform des Verfahrens werden zusätzlich zu den, in den zuvorigen Ausführungsformen genannten Verfahrensschritten, in einem auf den Verfahrensschritt 230 folgenden Verfahrensschritt 240, eine aktuelle Wetterlage des Standorts des Fahrzeugs charakterisierende Informationen empfangen. Hierbei kann es sich z.B. um die Außentemperatur und/oder die Luftfeuchtigkeit und/oder den Niederschlag handeln. Die empfangenen charakteristischen Informationen werden im Verfahrensschritt 300 noch zusätzlich bei der Ermittlung der Gaspedalkennlinie berücksichtigt.

In einer fünften Ausführungsform des Verfahrens werden zusätzlich zu den, in den zuvorigen Ausführungsformen genannten Verfahrensschritten, in einem auf den Verfahrensschritt 260 folgenden Verfahrensschritt 270 geprüft, ob ein Parkvorgang in einen Parkplatz hinein oder aus einem Parkplatz hinaus vorliegt. Der Parkvorgang wird hierbei in Abhängigkeit der in Verfahrensschritt 260 ermittelten Bewegungs-Trajektorie ermittelt, welche die voraussichtlich zukünftige Bewegung des Fahrzeugs bestimmt. Wird hierbei festgestellt, dass ein Parkvorgang vorliegt, werden in dem folgenden Verfahrensschritt 280 Informationen des Parkplatzes in Abhängigkeit der digitalen Karte mittels des Servers ermittelt. Hierbei handelt es sich z.B. um Informationen, die die Dimensionierung des Parkplatzes betreffen. Die ermittelten Parkplatzinformationen werden im Verfahrensschritt 300 noch zusätzlich bei der Ermittlung der Gaspedalkennlinie berücksichtigt, um den Fahrer bei besonders präzisen Parkmanövern zu unterstützen. Wird im Verfahrensschritt festgestellt, dass kein Parkvorgang vorliegt, wird das Verfahren von neuem gestartet oder alternativ beendet.

In einer sechsten Ausführungsform des Verfahrens werden zusätzlich zu den, in den zuvorigen Ausführungsformen genannten Verfahrensschritten, in einem auf den Verfahrensschritt 280 folgenden Verfahrensschritt 290 die Bodenbeschaffenheit in Abhängigkeit der empfangenen Abstandswerte und/oder der empfangenen, die aktuelle Wetterlage charakterisierenden Informationen ermittelt. Die ermittelte Bodenbeschaffenheit wird im Verfahrensschritt 300 noch zusätzlich bei der Ermittlung der Gaspedalkennlinie berücksichtigt.

In einer siebten Ausführungsform des Verfahrens wird zusätzlich zu den, in den zuvorigen Ausführungsformen genannten Verfahrensschritten, in einem auf den Verfahrensschritt 300 folgenden Verfahrensschritt 302 ein Warnsignal bei Anpassung der Gaspedalkennlinie an den Fahrer ausgegeben. Der Fahrer wird somit auf die bevorstehende Änderung des Fahrverhaltens hinsichtlich veränderter Motorleistung bei gleichem Gaspedalwinkel aufmerksam gemacht und davon nicht überrascht.

In einer achten Ausführungsform des Verfahrens wird zusätzlich zu den, in den zuvorigen Ausführungsformen genannten Verfahrensschritten, in einem auf den Verfahrensschritt 302 folgenden Verfahrensschritt 305 mittels des Servers geprüft, ob wenigstens ein Signal zur Anpassung der Gaspedalkennlinie empfangen wird. Das Anpassungssignal entspricht hierbei einem Wunsch zur Anpassung der Gaspedalkennlinie und dient dem Fahrer dazu, auf Wunsch und mittels Eingabe in eine Eingabeeinheit eine Steuerung der erzeugten Motorleistung in Abhängigkeit des Gaspedalwinkels zu erzeugen. Andererseits kann das Anpassungssignal auch als Bestätigung des Fahrers für eine zuvor in Verfahrensschritt 302 mittels des Warnsignals angezeigte Anpassung der Gaspedalkennlinie dienen. Falls kein Anpassungssignal empfangen wird, wird das Verfahren von neuem gestartet oder optional beendet.

## Patentansprüche

1. Verfahren zur Erzeugung einer Steuerung (330) einer in Abhängigkeit eines Gaspedalwinkels eines Fahrzeugs erzeugten Motorleistung, wobei das Verfahren die Verfahrensschritte aufweist:
- Empfangen (210) von wenigstens einer Standortinformation des Fahrzeugs mittels eines Servers (10), und
- Ermitteln (250) eines Standorts des Fahrzeugs auf einer digitalen Karte in Abhängigkeit der empfangenen Standortinformation mittels des Servers (10), und
- Ermitteln (300) einer Gaspedalkennlinie für das Gaspedal des Fahrzeugs in Abhängigkeit des ermittelten Standorts des Fahrzeugs mittels des Servers (10),
- Übertragen (320) der Gaspedalkennlinie von dem Server (10) an eine Steuereinheit (80) des Fahrzeugs, und
- Erzeugung (330) einer Steuerung der in Abhängigkeit des Gaspedalwinkels des Fahrzeugs erzeugten Motorleistung in Abhängigkeit der übertragenen Gaspedalkennlinie mittels der Steuereinheit (80).

2. Verfahren nach Anspruch 1, **dadurch gekennzeichnet, dass** das Verfahren zusätzlich die Verfahrensschritte aufweist:
- Empfangen (220) von wenigstens einer Betriebsgröße des Fahrzeugs mittels des Servers (10), und
- Ermitteln (260) einer Bewegungs-Trajektorie des Fahrzeugs in Abhängigkeit der empfangenen Betriebsgröße mittels des Servers (10), und
- Ermitteln (300) der Gaspedalkennlinie zusätzlich in Abhängigkeit der ermittelten Bewegungs-Trajektorie des Fahrzeugs mittels des Servers.

3. Verfahren nach Anspruch 1 oder 2, **dadurch gekennzeichnet, dass** das Verfahren zusätzlich die Verfahrensschritte aufweist:
- Empfangen (230) von Abstandswerten des Fahrzeugs zu, das Fahrzeug angrenzenden Objekten mittels des Servers (10),
- Ermitteln (300) der Gaspedalkennlinie zusätzlich in Abhängigkeit der empfangenen Abstandswerte mittels des Servers (10).

4. Verfahren nach einem der Ansprüche 1 bis 3, **dadurch gekennzeichnet, dass** das Verfahren zusätzlich die Verfahrensschritte aufweist:
- Empfangen (240) von, eine aktuelle Wetterlage des Standorts des Fahrzeugs charakterisierenden Informationen, insbesondere einer Außentemperatur und/oder einer Luftfeuchtigkeit und/oder eines Niederschlags, mittels des Servers (10), und
- Ermitteln (300) der Gaspedalkennlinie zusätzlich in Abhängigkeit der empfangenen, die aktuelle Wetterlage charakterisierenden Informationen mittels des Servers (10).

5. Verfahren nach einem der Ansprüche 3 oder 4, **dadurch gekennzeichnet, dass** Verfahren zusätzlich die Verfahrensschritte aufweist:
- Ermitteln (290) einer Beschaffenheit eines Bodens in Abhängigkeit der empfangenen Abstandswerte und/oder der empfangenen, die aktuelle Wetterlage charakterisierenden Informationen mittels des Servers (10), und
- Ermitteln (300) der Gaspedalkennlinie zusätzlich in Abhängigkeit der ermittelten Bodenbeschaffenheit mittels des Servers (10).

6. Verfahren nach einem der Ansprüche 2 bis 5, **dadurch gekennzeichnet, dass** das Verfahren zusätzlich die Verfahrensschritte aufweist:
- Ermitteln (270) eines Parkvorgangs in einen Parkplatz hinein oder aus einem Parkplatz hinaus in Abhängigkeit der ermittelten Bewegungs-Trajektorie des Fahrzeugs mittels des Servers (10), und
- Ermitteln (280) von Informationen des Parkplatzes, insbesondere einer Dimensionierung des Parkplatzes in Abhängigkeit der digitalen Karte mittels des Servers (10), und
- Ermitteln (300) der Gaspedalkennlinie zusätzlich in Abhängigkeit der ermittelten Parkplatzinformationen mittels des Servers.

7. Verfahren nach einem der Ansprüche 1 bis 6, **dadurch gekennzeichnet, dass** das Verfahren zusätzlich die Verfahrensschritte aufweist:
- Empfangen (305) wenigstens eines Signals zur Anpassung der Gaspedalkennlinie, insbesondere eines Signals, das einem Wunsch zur Anpassung der Gaspedalkennlinie entspricht, mittels des Servers (10), und
- Übertragen (320) der Gaspedalkennlinie von dem Server (10) an die Steuereinheit (80) zusätzlich in Abhängigkeit des empfangenen Anpassungssignals.

8. Server (10), ausgebildet zum Ermitteln und zum Übertragen einer Kennlinie für ein Gaspedal eines Fahrzeugs und zur Ausführung eines Verfahrens nach einem der Ansprüche 1 bis 7, wobei der Server (10) dazu ausgebildet ist,
- wenigstens eine Standortinformation des Fahrzeugs zu empfangen, und
- einen Standort des Fahrzeugs auf einer digitalen Karte in Abhängigkeit der empfangenen Standortinformation zu ermitteln, und
- eine Gaspedalkennlinie für das Gaspedal des Fahrzeugs in Abhängigkeit des ermittelten Standorts des Fahrzeugs zu ermitteln, und
- die ermittelte Gaspedalkennlinie an eine Steuereinheit (80) des Fahrzeugs zu übertragen.

9. System zur Erzeugung einer Steuerung einer in Abhängigkeit eines Gaspedalwinkels eines Fahrzeugs erzeugten Motorleistung und zur Ausführung eines Verfahrens nach einem der Ansprüche 1 bis 7, wobei das System wenigstens umfasst,
- einen Server (10) nach Anspruch 8, und
- eine Standorterfassungseinheit (20), ausgebildet zum Erfassen wenigstens einer Standortinformation des Fahrzeugs, und
- eine Speichereinheit (60), ausgebildet zum Hinterlegen einer digitalen Karte, und
- eine Steuereinheit (80), ausgebildet zum Erzeugen einer Steuerung der in Abhängigkeit des Gaspedalwinkels des Fahrzeugs erzeugten Motorleistung.

10. System nach Anspruch 9, **dadurch gekennzeichnet, dass** das System zusätzlich umfasst
- wenigstens einen Sensor (50), ausgebildet zum Erfassen wenigstens einer Betriebsgröße des Fahrzeugs,
wobei der Server (10) dazu ausgebildet ist, die wenigstens eine Betriebsgröße des Fahrzeugs zu empfangen und eine Bewegungs-Trajektorie des Fahrzeugs in Abhängigkeit der wenigstens einen Betriebsgröße zu ermitteln und zusätzlich in Abhängigkeit der ermittelten Bewegungs-Trajektorie des Fahrzeugs die Gaspedalkennlinie des Fahrzeugs zu ermitteln und die ermittelte Gaspedalkennlinie an die Steuereinheit (80) des Fahrzeugs zu übertragen.

11. System nach Anspruch 9 oder 10, **dadurch gekennzeichnet, dass** das System zusätzlich umfasst
- wenigstens einen Abstandssensor (30), ausgebildet zum Erfassen von Abstandswerten des Fahrzeugs zu, das Fahrzeug angrenzenden Objekten,
wobei der Server (10) dazu ausgebildet ist, die Abstandswerte zu empfangen und zusätzlich in Abhängigkeit der Abstandswerte die Gaspedalkennlinie des Fahrzeugs zu ermitteln und die ermittelte Gaspedalkennlinie an die Steuereinheit (80) des Fahrzeugs zu übertragen.

12. System nach einem der Ansprüche 9 bis 11, **dadurch gekennzeichnet, dass** das System zusätzlich umfasst
- einen zweiten Server (25), ausgebildet zur Erfassung von, eine aktuellen Wetterlage des Standorts des Fahrzeugs charakterisierenden Informationen,
wobei der Server (10) dazu ausgebildet ist, die, die aktuelle Wetterlage charakterisierenden Informationen zu empfangen und zusätzlich in Abhängigkeit der, die aktuellen Wetterlage charakterisierenden Informationen, die Gaspedalkennlinie des Fahrzeugs zu ermitteln und die ermittelte Gaspedalkennlinie an die Steuereinheit (80) des Fahrzeugs zu übertragen.

13. System nach einem der Ansprüche 9 bis 12, **dadurch gekennzeichnet, dass** das System zusätzlich umfasst
- wenigstens eine Eingabeeinheit (40), ausgebildet zur Eingabe wenigstens eines Signals zur Anpassung der Gaspedalkennlinie, insbesondere eines Signals, das einem Wunsch zur Anpassung der Gaspedalkennlinie entspricht,
wobei der Server (10) dazu ausgebildet ist, das wenigstens eine Anpassungssignal zu empfangen und zusätzlich in Abhängigkeit des wenigstens einen Anpassungssignals der Gaspedalkennlinie, die Gaspedalkennlinie des Fahrzeugs an die Steuereinheit (80) des Fahrzeugs zu übertragen.

14. System nach einem der Ansprüche 11 bis 13, **dadurch gekennzeichnet, dass** der Server (10) dazu ausgebildet ist, eine Beschaffenheit eines Bodens in Abhängigkeit der empfangenen Abstandswerte und/oder der empfangenen, die aktuelle Wetterlage charakterisierenden Informationen zu ermitteln und zusätzlich in Abhängigkeit der Bodenbeschaffenheit, die Gaspedalkennlinie des Fahrzeugs zu ermitteln und an die Steuereinheit (80) des Fahrzeugs zu übertragen.
